# EUROPEAN PATENT APPLICATION

(11) **EP 3 816 593 A1**
(43) Date of publication of application: **05.05.2021**
(21) Application number: 20204502.7
(22) Date of filing: 28.10.2020
(51) Int. Cl.: G01F 23/74

(54) **OMNIPOLAR MAGNETIC SWITCH WITH AXIALLY MAGNETIZED MAGNET ASSEMBLY FOR IMPROVED PRECISION**

(30) Priority: 29.10.2019 US 201916666511
(71) Applicant: Littelfuse, Inc., Chicago, IL 60631 (US)
(72) Inventor: Knapp, Stephen E., Chicago, IL Illinois 60631 (US)
(74) Representative: Arnold & Siedsma

(57) **Abstract**

An omnipolar sensor is provided. The sensor may include a plurality of omnipolar switches disposed adjacent to one another, and a permanent magnet assembly disposed adjacent the plurality of omnipolar switches. The permanent magnet assembly is operable to move axially relative to the plurality of omnipolar switches, wherein the plurality of omnipolar switches are responsive to a magnetic field produced by the permanent magnet assembly, and wherein the permanent magnet axially magnetized.

## Description

### Background of the Disclosure

### Field of the Disclosure

The present disclosure relates to switching sensors and, in particular, to a sensor including one or more omnipolar switches responsive to an axially magnetized magnet assembly, resulting in improved switching point precision.

### Discussion of Related Art

Fluid level sensors are widely used in the petroleum, chemical, power, environmental, and other fields, for example, to measure the fluid level or pressure within a vessel. Fluid-level sensors are also often applied in a system used to control the level or set an alarm related to the level of a fluid. Presently, these devices commonly use reed switches or Hall sensors. The structure of fluid-level sensors using reed switches is relatively simple and inexpensive, and can be applied to controlling or measuring. The general working principle of reed switches involves a magnetic float that moves up and down with the fluid level, providing a moving magnetic field that changes the state of the reed switches. In this structure, when the magnetic float is at the height of a reed switch, the reed switch will be closed by the magnetic field, thus forming a closed circuit. When the magnetic float moves away from the reed switch, the switch opens due to the mechanical spring action of the reed, leaving an open circuit. The reed switches may be connected to a resistive network, such that the signal measured at the level sensor output varies as a function of the float height. The signal thus corresponds to and determines the fluid level.

Reed switches may be susceptible to switch failure, however, leading to an erroneous reading. Furthermore, because switches are relatively large, the resolution of this type of fluid-level sensor is limited. Still yet, reed switches may be damaged by impact, abrasion, and vibration, which can crack the glass envelope, and which makes the sensors difficult to install and solder. Additionally, when there are inductive or capacitive loads attached to the level sensor, the service life of the level sensor will be affected.

The working principle of Hall sensor based fluid-level sensors is similar, except that Hall switches are used instead of reed switches. Hall sensors are generally smaller and easier to install and solder, and because hall sensors have digital output through an internal A/D convertor, they have better immunity to electromagnetic interference. Unfortunately, Hall switches have high current consumption, on the order of milliamps, so battery powered fluid-level sensors require frequent maintenance and replacement, increasing operational cost.

### Summary of the Disclosure

In view of the foregoing, what is needed is a sensor providing increased switch point precision and, in particular, an omnipolar switch responsive to an axial magnetized magnet assembly.

An exemplary omnipolar responsive sensor according to embodiments of the disclosure may include a plurality of omnipolar switches disposed adjacent to one another, and a permanent magnet assembly disposed adjacent the plurality of omnipolar switches, wherein the permanent magnet assembly is operable to move axially relative to the plurality of omnipolar switches, wherein the plurality of omnipolar switches are responsive to a magnetic field produced by the permanent magnet assembly, and wherein the permanent magnet assembly is axially magnetized.

An exemplary system may include a plurality of omnipolar switches disposed adjacent to one another, and a permanent magnet assembly disposed adjacent the plurality of omnipolar switches, wherein the permanent magnet assembly is operable to move axially relative to the plurality of omnipolar switches, wherein the plurality of omnipolar switches are responsive to a magnetic field produced by the permanent magnet assembly, and wherein the permanent magnet assembly is axially magnetized.

An exemplary omnipolar resistive ladder sensor according to embodiments of the disclosure may include a tube immersed in a fluid, the tube containing a plurality of omnipolar switches, and a float concentrically surrounding the tube, the float configured to float in the fluid and to move relative to the tube in an axial direction as a height of the fluid level changes. The fluid-level sensor may further include a permanent magnet assembly disposed within the float, wherein each of the plurality of omnipolar switches is responsive to a leading edge of the permanent magnet assembly, and wherein the permanent magnet assembly is axially magnetized.

### Brief Description of the Drawings

The accompanying drawings illustrate exemplary approaches of the disclosed omnipolar switches so far devised for the practical application of the principles thereof, and in which:
**FIG. 1** is an isometric view illustrating an omnipolar resistive ladder sensor according to exemplary embodiments of the disclosure;
**FIG. 2A** is a side cross-sectional view of the omnipolar resistive ladder sensor of **FIG. 1** within a containment vessel according to exemplary embodiments of the disclosure;
**FIG. 2B** is a side cross-sectional view of another omnipolar resistive ladder sensor within a containment vessel according to exemplary embodiments of the disclosure;
**FIG. 3** is a schematic of the omnipolar resistive ladder sensor of **FIG. 1** according to exemplary embodiments of the disclosure;
**FIG. 4** is graph illustrating operation of the fluid-level sensor of **FIG. 1** employing an axially magnetized magnet assembly according to exemplary embodiments of the disclosure; and
**FIG. 5** is graph illustrating operation of the fluid-level sensor of **FIG. 1** employing an axially magnetized magnet assembly according to exemplary embodiments of the disclosure.

The drawings are not necessarily to scale. The drawings are merely representations, not intended to portray specific parameters of the disclosure. Furthermore, the drawings are intended to depict exemplary embodiments of the disclosure, and therefore is not considered as limiting in scope.

Furthermore, certain elements in some of the figures may be omitted, or illustrated not-to-scale, for illustrative clarity. The cross-sectional views may be in the form of "slices", or "near-sighted" cross-sectional views, omitting certain background lines otherwise visible in a "true" cross-sectional view, for illustrative clarity. Furthermore, for clarity, some reference numbers may be omitted in certain drawings.

### Description of Embodiments

The present disclosure will now proceed with reference to the accompanying drawings, in which various approaches are shown. It will be appreciated, however, that the omnipolar sensor may be embodied in many different forms and should not be construed as limited to the approaches set forth herein. Rather, these approaches are provided so that this disclosure will be thorough and complete, and will fully convey the scope of the disclosure to those skilled in the art. In the drawings, like numbers refer to like elements throughout.

As disclosed herein, embodiments of the disclosure provide omnipolar resistive ladder sensing using any number of discrete switch points to provide increased switch point resolution. For the sake of explanation, embodiments of the disclosure will hereinafter be described in the non-limiting context of a fluid-level sensor including a tube immersed in a fluid, the tube containing a plurality of omnipolar switches, and a float concentrically surrounding the tube. It will be appreciated, however, that the exemplary omnipolar resistive ladder sensor described herein may have many additional and varied applications beyond that of a fluid-level sensor.

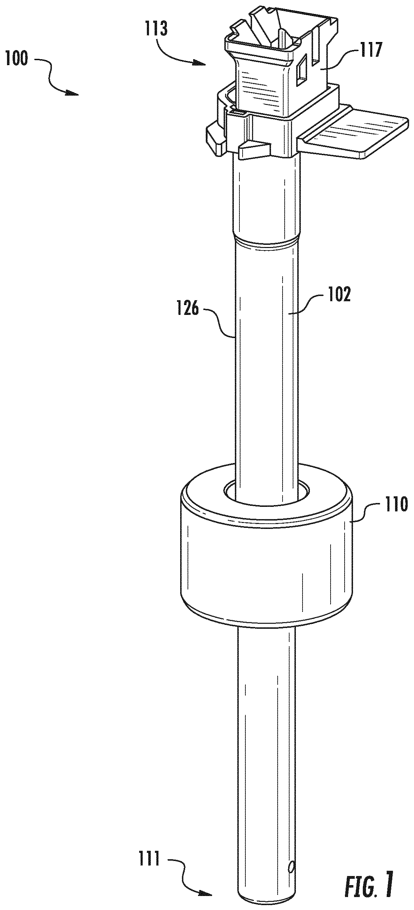

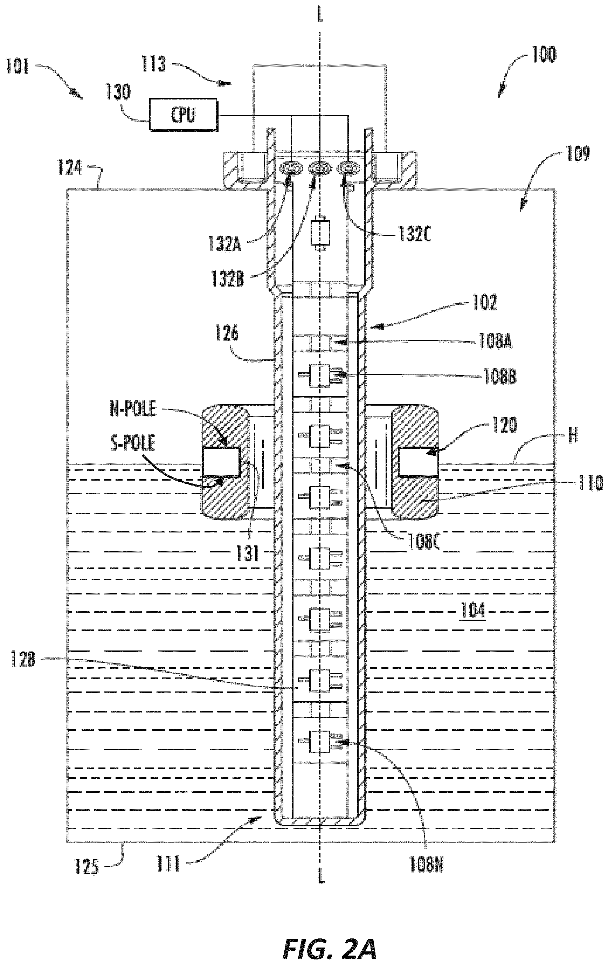

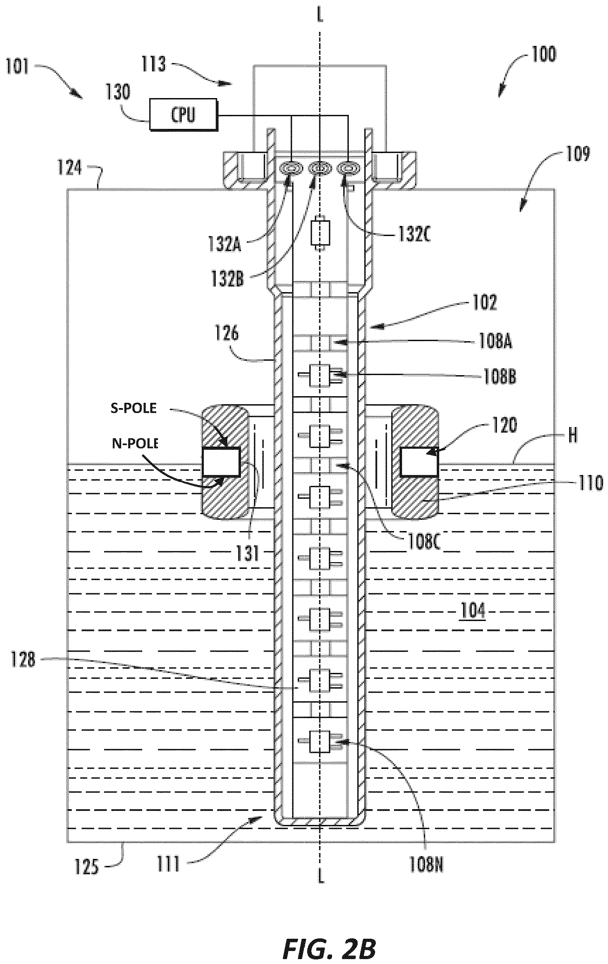

Referring now to **FIGs. 1****,** **2A****,** and **2B****,** a system 101 including an omnipolar resistive ladder sensor 100 according to embodiments of the disclosure will be described. As shown, the omnipolar resistive ladder sensor (hereinafter "sensor") 100 of the system 101 may include a tube 102 immersed in a fluid 104, the tube 102 containing a plurality of omnipolar switches 108A-N extending at least partially along a lengthwise axis of the tube 102. For ease of explanation, an end of the tube 102 disposed within the fluid 104 of a containment vessel 109 (e.g., a fluid tank) will be hereinafter referred to as a distal end 111 of the sensor 100, while an end of the tube 102 located external to the containment vessel 109 will be hereinafter referred to as a proximal end 113 of the sensor 100. As shown, the proximal end 113 of the tube 102 may include a cap 117, which is removable to permit access to the interior of the tube 102.

A float 110 concentrically surrounds the tube 102, and is configured to float in the fluid 104. The float may move axially along a central axis 'L'relative to the tube 102 as an amount (e.g., volume) or a height 'H' of the fluid level changes within the containment vessel 109, such as a tank. As will be described in greater detail below, a permanent magnet assembly 120 is coupled to the float 110. During operation, the plurality of omnipolar switches 108A-N are responsive to a magnetic field produced by the permanent magnet assembly 120 so as to switch, for example, from an open position to a closed position, and therefore provide an indication of the height of the fluid 104 within the containment vessel 109.

More specifically, the tube 102 may be a non-magnetic tube fixed with respect to a top wall 124 of the containment vessel 109, as shown, or to a bottom wall 125 of the containment vessel 109. The float 110 floats on the surface of the fluid 104, allowing the float 110 to move up and down along an outside surface 126 of the tube 102. In exemplary embodiments, the tube 102 and the float 110 are circular and concentrically positioned with respect to one another, sharing the same central axis 'L' as the tube 102. A printed circuit board (PCB) 128 may be located within the tube 102, and the plurality of omnipolar switches 108A-N may be physically and electrically coupled thereto. In some embodiments, the PCB 128 is a flexible PCB extending substantially an entire height/length of the tube 102. Although not shown, the PCB 128 may further include coupled thereto an encoder, a data bus, a power line, and a ground line. In some embodiments, the PCB 128 may include a series of small rigid printed circuit boards, which may be interconnected using a flexible printed circuit board or wiring.

As shown, the plurality of omnipolar switches 108A-N each have a specific vertical position in the tube 102. The positions of each of the omnipolar switches 108AN may be set to any desired position and spacing within the tube 102, thus permitting the sensor 100 to have high resolution. The permanent magnet assembly 120 is fixed within the float 110 so that the permanent magnet assembly 120 fully or partially surrounds the tube 102. Furthermore, the permanent magnet assembly 120 may be axially magnetized, and can produce a magnetic field of sufficient magnitude and direction an adjacent omnipolar switch in order to initiate the desired switching effect. In exemplary embodiments, the magnetization direction of either the axially magnetized permanent magnet assembly 120 is parallel, or substantially parallel, to the axis 'L' of the tube 102. In the embodiment shown in **FIG. 2A****,** the permanent magnet assembly 120 includes a north-pole positioned atop a south-pole, wherein the north-pole defines a leading edge 131 of the permanent magnet assembly 120. In the embodiment shown in **FIG. 2B****,** the poles are reversed such that the permanent magnet assembly 120 includes a south-pole positioned atop a north-pole.

In exemplary embodiments, each output of the plurality of omnipolar switches 108A-N is connected to an input of a processing unit 130 via a set of pins 132A-C. In some embodiments, the set of pins 132A-C is coupled to an encoder unit and a data bus (not shown). In other embodiments, the plurality of omnipolar switches 108A-N and the set of pins 132A-C are electrically coupled to a sensor circuit (not shown). As is known in the art, the processing unit 130 refers, generally, to any apparatus for performing logic operations, computational tasks, control functions, etc. A processor may include one or more subsystems, components, and/or other processors. A processor may include various logic components operable using a clock signal to latch data, advance logic states, synchronize computations and logic operations, and/or provide other timing functions. During operation, the processing unit 130 may receive signals from the set of pins 132A-C or transmitted over a LAN and/or a WAN (e.g., T1, T3, 56 kb, X.25), broadband connections (ISDN, Frame Relay, ATM), wireless links (802.11, Bluetooth, etc.), and so on.

During use, when the sensor 100 is placed in the fluid 104, the float 110 floats at the surface of the fluid 104, and may move up and down along the length of the tube 102 as the height 'H' of the fluid 104 changes. The particular omnipolar sensor closest to the magnetic field of the permanent magnet assembly 120 (e.g., omnipolar switch 108C) is then either closed or opened, resulting in a change in resistance, which is output via the set of pins 132A-C and received by the processing unit 130 or sensor circuit. Based on the resistance value observed when the omnipolar switch 108C is closed, the processing unit or sensing circuit can recognize the height 'H' of the fluid 104. Alternatively, in the case that each of the plurality of omnipolar switches 108A-N is spaced at a known axial position within the tube 102, the position of the float 110 along the exterior surface 126 of the tube 102 may be readily determined, thereby yielding a digital level sensor for measuring the level of the fluid 104 in which the tube 102 is immersed.

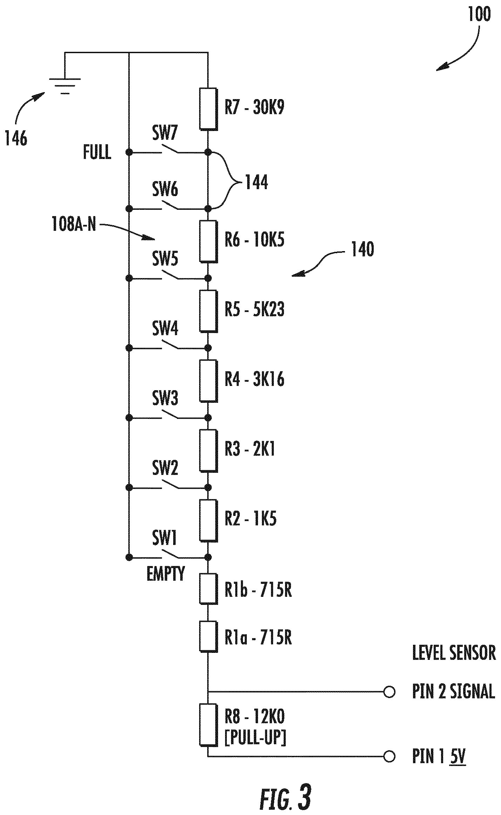

**FIG. 3** is a schematic diagram showing the interconnection of the plurality of switches 108A-N of the sensor 100. Discrete voltage levels corresponding to each switch point are developed using a resistor ladder construction, which can be extended to any number of levels allowing for deep tank applications. Variable switch spacing schemes can also be devised to suit tanks with spherical or other varying cross sections. As configured, the sensor 100 may produce a signal dependent on the highest positioned omnipolar switch having one of its switch contact elements activated. This may be done with the use of a resistor ladder 140 comprising a set of series connected resistors R1-R7 defining interconnecting nodes 144 and having known voltage connected across the resistor ladder 140. In one embodiment, the resistor ladder 140 has an upper end attached to a voltage (e.g. 12 V, 24 V, etc.) 146 and a lower end attached to ground.

Each node 144 may be connected to one of the magnetically activated omnipolar switches SW1-SW7 such that when a particular magnetically activated omnipolar switch is activated by the permanent magnet assembly 120, the switch connects the corresponding node 144 to ground. In this way, as the float 110 rises or lowers to activate an adjacent switch of SW1-SW7, the voltage is increased or decreased as a function of float height. In the non-limiting embodiment shown, an activated (i.e., closed) SW7 may indicate a full fluid level, while an activated SW1 may indicate a low fluid level. Furthermore, in various embodiments, each of the resistors R1-R7 may be of uniform or different values. One will appreciate that the number of switches and resistors may vary depending on the application. For example, when the fluid level in a vessel is deep, and high resolution is desired, particularly towards the bottom of the vessel, then the number and/or position of the switches may be increased.

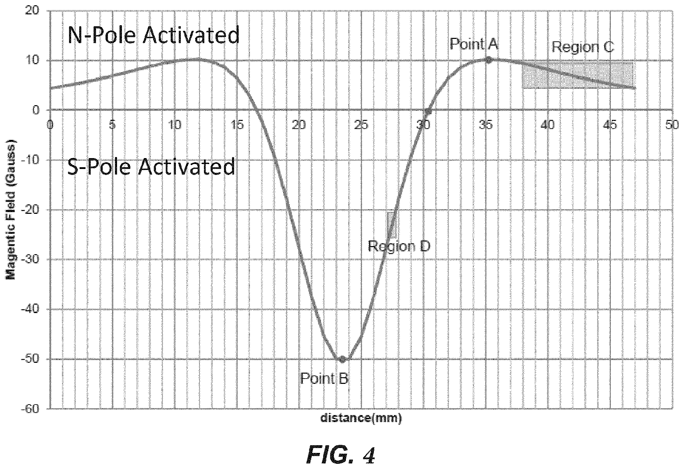

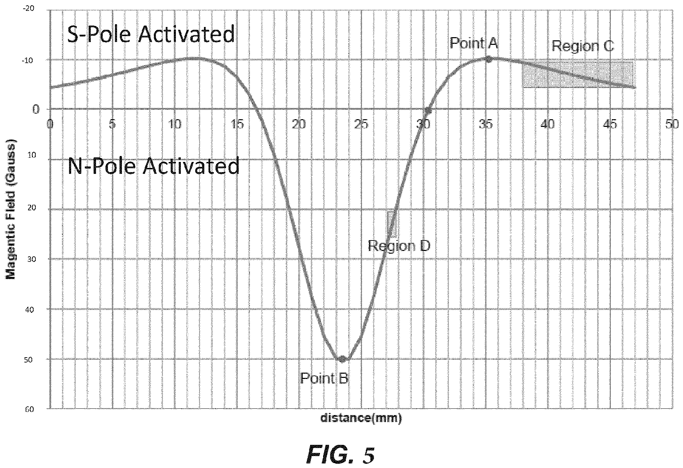

The output signal of a plurality of omnipolar switches 108A-N as the float descends with the fluid 104 is illustrated in **FIGs. 4-5****.** **FIG. 4** represents the permanent magnet shown in **FIG. 2A****,** in which the north-pole is positioned atop the south-pole. **FIG. 5** represents the permanent magnet shown in **FIG. 2B****,** in which the south-pole is positioned atop the north-pole. In both cases, improved switch point precision can be attained by using a higher B_{OP} magnitude (the Operate Point) threshold of the omnipolar switch and pairing this with an axial magnetized magnet assembly. The minimum Bₒₚ magnitude of the omnipolar device should be greater than the first maximum B field encountered on the approach (Point A) so that the omnipolar device switches on the interior slope to the left of Point A. The omnipolar device maximum Bₒₚ magnitude must also be less than the axial magnet maximum magnitude (Point B) ensuring the omnipolar device activates between Point A and Point B. The advantage of having the omnipolar device switch on the steep slope of the axial magnet assembly curve is that the switch point positional variation is reduced. This is demonstrated by the activation range of a -23 +/- 2.5 G omnipolar sensor, being 0.7 mm wide [27.8 - 27.1mm] (Region D) compared to the 8.9 mm [46.9 - 38mm] activation range in Region C.

For the sake of convenience and clarity, terms such as "top," "bottom," "upper," "lower," "vertical," "horizontal," "lateral," and "longitudinal" are used herein to describe the relative placement and orientation of components and their constituent parts as appearing in the figures. The terminology will include the words specifically mentioned, derivatives thereof, and words of similar import.

As used herein, an element or operation recited in the singular and proceeded with the word "a" or "an" is to be understood as including plural elements or operations, until such exclusion is explicitly recited. Furthermore, references to "one embodiment" of the present disclosure are not intended as limiting. Additional embodiments may also incorporating the recited features.

Furthermore, the terms "substantial" or "substantially," as well as the terms "approximate" or "approximately," can be used interchangeably in some embodiments, and can be described using any relative measures acceptable by one of ordinary skill in the art. For example, these terms can serve as a comparison to a reference parameter, to indicate a deviation capable of providing the intended function. Although non-limiting, the deviation from the reference parameter can be, for example, in an amount of less than 1%, less than 3%, less than 5%, less than 10%, less than 15%, less than 20%, and so on.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Furthermore, the present disclosure has been described herein in the context of a particular implementation in a particular environment for a particular purpose. Those of ordinary skill in the art will recognize the usefulness is not limited thereto and the present disclosure may be beneficially implemented in any number of environments for any number of purposes. Thus, the claims set forth below are to be construed in view of the full breadth and spirit of the present disclosure as described herein.

## Claims

1. An omnipolar responsive sensor, comprising:
a plurality of omnipolar switches disposed adjacent to one another;
a permanent magnet assembly disposed adjacent the plurality of omnipolar switches, wherein the permanent magnet assembly is operable to move axially relative to the plurality of omnipolar switches, wherein the plurality of omnipolar switches are responsive to a magnetic field produced by the permanent magnet assembly, and wherein the permanent magnet assembly is axially magnetized.

2. The omnipolar responsive sensor of claim 1 with one or more of the following:
wherein the plurality of omnipolar switches are coupled to a printed circuit board;
further comprising one or more resistors electrically connected between the plurality of omnipolar switches;
wherein the permanent magnet assembly includes a north pole positioned atop a south pole, or a south pole positioned atop a north pole;
wherein each of the plurality of omnipolar switches changes from an open position to a closed position in response to the magnetic field.

3. The omnipolar responsive sensor of claim 1 or 2, further comprising:
a tube immersed in a fluid, the tube containing the plurality of omnipolar switches;
a float concentrically surrounding the tube, the float configured to float in the fluid and to move axially relative to the tube as a height of the fluid changes, wherein the permanent magnet assembly is positioned within the float.

4. The omnipolar responsive sensor of claim 3, wherein the printed circuit board is contained within the tube.

5. The omnipolar responsive sensor of any of the preceding claims, wherein each of the plurality of omnipolar switches has a minimum operate point threshold and a maximum operate point threshold, wherein the minimum operate point threshold is greater than a first maximum magnetic field B at a first point, and wherein the maximum operate point threshold is less than a maximum magnitude of the permanent magnet at a second point.

6. A system, comprising:
a plurality of omnipolar switches disposed adjacent to one another;
a permanent magnet assembly disposed adjacent the plurality of omnipolar switches, wherein the permanent magnet assembly is operable to move axially relative to the plurality of omnipolar switches, wherein the plurality of omnipolar switches are responsive to a magnetic field produced by the permanent magnet assembly, and wherein the permanent magnet assembly is axially magnetized.

7. The system of claim 6, with one or more of the following:
wherein the plurality of omnipolar switches are coupled to a printed circuit board;
further comprising one or more resistors electrically connected between the plurality of omnipolar switches;
wherein the permanent magnet assembly includes a north pole positioned atop a south pole, or a south pole positioned atop a north pole;
wherein each of the plurality of omnipolar switches changes from an open position to a closed position in response to the magnetic field.

8. The system of claim 7, further comprising:
a tube immersed in a fluid, the tube containing the plurality of omnipolar switches;
a float concentrically surrounding the tube, the float configured to float in the fluid and to move axially relative to the tube as a height of the fluid changes, wherein the permanent magnet assembly is positioned within the float.

9. The system of claim 8, wherein the printed circuit board is contained within the tube.

10. The system of claim 9 or 10, wherein the permanent magnet assembly concentrically surrounds the tube.

11. An omnipolar resistive ladder sensor, comprising:
a tube immersed in a fluid, the tube containing a plurality of omnipolar switches;
a float concentrically surrounding the tube, the float configured to float in the fluid and to move relative to the tube in an axial direction as a height of the fluid changes; and
a permanent magnet assembly disposed within the float, wherein each of the plurality of omnipolar switches is responsive to a leading edge of the permanent magnet assembly, and wherein the permanent magnet assembly is axially magnetized.

12. The omnipolar resistive ladder sensor of claim 11, wherein the plurality of omnipolar switches are coupled to a printed circuit board.

13. The omnipolar resistive ladder sensor of claim 12, further comprising one or more resistors electrically connected to the printed circuit board, between the plurality of omnipolar switches.

14. The omnipolar resistive ladder sensor of any of the claims 11-13, wherein the permanent magnet assembly concentrically surrounds the tube.
